# EUROPÄISCHE PATENTSCHRIFT

(11) **EP 2 167 856 B1**
(45) Veröffentlichungstag und Bekanntmachung des Hinweises auf die Patenterteilung: **15.08.2012**
(21) Anmeldenummer: 08749485.2
(22) Anmeldetag: 20.05.2008
(51) Int. Cl.: F16K 31/00

(54) **PIEZOELEKTRISCHES VENTIL**
PIEZOELECTRIC VALVE
SOUPAPE PIEZOELECTRIQUE

(30) Priorität: 20.07.2007 DE 102007034048
(43) Veröffentlichungstag der Anmeldung: 31.03.2010
(73) Patentinhaber: Hoerbiger Automatisierungstechnik Holding GmbH, 86972 Altenstadt (DE)
(72) Erfinder: SCHAIBLE, Jochen, 72213 Altensteig (DE); GRÖDL, Marcus, 87640 Altdorf (DE)
(74) Vertreter: Grättinger Möhring von Poschinger Patentanwälte Partnerschaft
(86) Internationale Anmeldenummer: PCT/EP2008/004008
(87) Internationale Veröffentlichungsnummer: WO 2009/012833

(56) Entgegenhaltungen:
- EP-A- 0 913 609
- US-A- 4 340 083

## Beschreibung

Die vorliegende Erfindung betrifft ein piezoelektrisches Ventil mit einem Gehäuse, welches einen durchströmbaren Innenraum aufweist, in den mindestens eine mit einem zugeordneten Anschluss für das Strömungsmedium kommunizierende, einen Dichtsitz mit einer Sitzfläche aufweisende Düse mündet, wobei in dem Innenraum des Gehäuses ein durch elektrische Beaufschlagung verformbares piezoelektrisches Biegeelement dergestalt aufgenommen ist, dass die Düse durch einen aufgrund der Verformung des Biegeelements relativ zu der Düse bewegbaren Abschnitt des Biegelements verschließbar ist, und das Biegelement zumindest in seinem der Düse gegenüberliegenden Bereich eine Auflage aus einem elastisch nachgiebigen Material aufweist.

Piezoelektrische Ventile sind in vielfältigen Ausgestaltungen bekannt, beispielsweise aus der DE 2511752 A1, der DE 3400645 A1, der DE 3527069 A1, der EP 0404082 B1, der EP 0538236 A1, der DE 4320909 C1, der DE 4410153 C1, der WO 97/09555 A1, der DE 19547149 A1, der EP 0191011 B1 und der EP 0565510 B1. Gattungsgemäße piezoelektrische Ventile, bei denen im Hinblick auf eine möglichst geringe Leckage in der Schließstellung das piezoelektrische Biegeelement zumindest in seinem der Düse gegenüberliegenden Bereich eine Auflage aus einem elastisch nachgiebigen Material aufweist, sind insbesondere in der EP 0907852 B1 und der EP 0943812 A1 beschrieben. Nach der an erster Stelle genannten EP 0907852 B1 ist dabei die Auflage aus einem elastisch nachgiebigen Material als eine auf dem Biegeelement lokal angebrachte, beispielsweise aus Fluorosilikon bestehende Elastomerscheibe ausgeführt. Nach der EP 0943812 A1 ist auf den frei beweglichen, außerhalb der Einspannung liegenden Bereich des piezoelektrischen Biegeelements ein Überzug aus einem Elastomer aufgebracht, der endseitig einen Dichtwulst aufweist, welcher für eine Abdichtung des Innenraums des Gehäuses nach außen sorgt.

Verglichen mit den meisten anderen elektrisch ansteuerbaren Ventilen zeichnen sich piezoelektrische Ventile durch eine besonders hohe Schaltdynamik aus, welche diese Ventilart als besonders günstig für eine Vielzahl von Anwendungen erscheinen lässt. Allerdings setzt die charakteristische Kraft-Weg-Kennlinie des Biegewandlers (vgl. insoweit insbesondere die DE 4410153 C1 der Anwendung von piezoelektrischen Ventilen gewisse Grenzen, weil die mögliche Schließkraft mit zunehmender Auslenkung abnimmt. Hierdurch wird typischerweise die durch das piezoelektrische Ventil zu schaltende fluidische Leistung, welche proportional ist zu dem Produkt aus zu schaltendem Durchfluss und zu schaltendem Druckgefälle, begrenzt. US-A-4340083 wird als nächstliegender Stand der Technik augesehen.

Der vorliegenden Patentanmeldung liegt demgemäß die Aufgabe zugrunde, ein piezoelektrisches Ventil der eingangs angegebenen Art mit gesteigerter Praxistauglichkeit bereitzustellen, mit welchem sich - unter Beibehaltung oder sogar Steigerung der bekannten Vorteile wie insbesondere der hohen Schaltdynamik - in der Praxis höhere Schaltleistungen erreichen lassen als mit bekannten gattungsgemäßen piezoelektrischen Ventilen.

Diese Aufgabenstellung wird gemäß der vorliegenden Erfindung dadurch gelöst, dass bei einem piezoelektrischen Ventil der gattungsgemäßen Art der Dichtsitz stirnseitig an einem Düseneinsatz angeordnet ist, welcher im wesentlichen senkrecht zur Sitzfläche verschiebbar in einer gehäusefesten Aufnahme angeordnet ist, wobei zwischen der Aufnahme und dem zugeordneten Düseneinsatz ein wärmedehnbares Kompensationsglied wirkt. Ein für die vorliegende Erfindung wesentliches Merkmal besteht somit darin, dass der Dichtsitz der Düse nicht eine unveränderbare bzw. fest eingestellte Lage relativ zum Gehäuse einnimmt, sondern dass vielmehr die Stellung des Dichtsitzes relativ zum Gehäuse durch Verschieben eines an einer seiner Stirnseiten den Dichtsitz aufweisenden Düseneinsatzes in einer gehäusefesten Aufnahme veränderbar ist. Die Lage des Dichtsitzes relativ zum Gehäuse ändert sich dabei in Abhängigkeit von den Dimensionen eines wärmedehnbaren Kompensationsglieds, welches dergestalt zwischen der gehäusefesten Aufnahme und dem zugeordneten Düseneinsatz wirkt, dass es entsprechend seiner thermischen Ausdehnung bzw. Schrumpfung den Düseneinsatz in der zugeordneten Aufnahme verschiebt. Die Anordnung des genannten wärmedehnbaren Kompensationsglieds ist dabei dergestalt, dass bei einer wärmedehnungsbedingten Ausdehnung des Kompensationsglieds der Düseneinsatz innerhalb der gehäusefesten Aufnahme von dem Biegeelement wegbewegt wird. Es vergrößert sich somit, mit anderen Worten, bei einer wärmedehnungsbedingten Ausdehnung des Kompensationsglieds der Abstand des stirnseitig an dem Düseneinsatz angeordneten Dichtsitzes zu der zugeordneten Oberfläche des Biegeelements. Auf diese Weise wird ein wärmedehnungsbedingtes Aufquellen der auf der betreffenden Oberfläche des Biegewandlers angeordneten Auflage aus elastomerem Material in dem Sinne kompensiert, dass der Abstand, den die Oberfläche der Auflage aus elastomerem Material bei einem bestimmten Schaltzustand des Ventils zu der Sitzfläche des Dichtsitzes einhält, unabhängig von der Betriebstemperatur der Ventils im wesentlichen konstant bleibt, sich jedenfalls signifikant weniger verändert, als dies bei bekannten gattungsgemäßen piezoelektrischen Ventilen der Fall ist. Dies wirkt sich in mehreren für die praktische Verwendung piezoelektrischer Ventile entscheidenden Vorteilen aus. Zum einen können die Sicherheiten, die bei bekannten gattungsgemäßen piezoelektrischen Ventilen im Hinblick auf deren Einsatz bei unterschiedlichen Betriebstemperaturen (typischer Betriebsbereich: -30 bis +80 °C; erweiterter Betriebsbereich: -50 bis +100 °C) entfallen oder zumindest erheblich reduziert werden, was sich insbesondere bei Anwendungen im erweiterten Temperaturbereich sehr vorteilhaft auswirkt. Infolge dessen lassen sich zum einen erfindungsgemäße piezoelektrische Ventile gestalten, die namentlich bei geringen Betriebstemperaturen mit einem geringeren Leerhub arbeiten als bekannte gattungsgemäße Ventile, wie auch solche piezoelektrischen Ventile, deren Durchflussleistung keinem oder nur einem gegenüber dem Stand der Technik reduzierten Temperatureinfluss unterliegt. Dies wirkt sich nicht nur vorteilhaft auf die Schaltdynamik aus. Auch lassen sich unter Berücksichtigung der typischen Kraft-Weg-Kennlinie von piezoelektrischen Biegeelementen somit in Anwendung der vorliegenden Erfindung als Folge von reduzierten Leerhüben höhere fluidische Leistungen schalten. Weiterhin ist die Betriebskennlinie des erfindungsgemäßen piezoelektrischen Ventils über einen größeren Temperaturbereich besser reproduzierbar, als dies für bekannte gattungsgemäße Ventile zutrifft. Dies erweitert substantiell die Einsatzmöglichkeiten von piezoelektrischen Ventilen in solche Bereiche hinein, in denen eine besonders gute Reproduzierbarkeit des Schaltverhaltens des Ventils erforderlich ist. Auch lässt sich das erfindungsgemäße piezoelektrische Ventil in einem größeren Temperaturbereich betriebssicher einsetzen, als dies nach dem Stand der Technik möglich ist, was wiederum die Einsatzmöglichkeiten der hinsichtlich der Schaltdynamik anderen elektrisch betätigten Ventilen überlegenen piezoelektrischen Ventilen insbesondere in den Bereich höherer Temperaturen hinein ausdehnt.

Um die vorstehend erläuterten vorteilhaften Wirkungen in einem besonders ausgeprägten Maße zu erreichen ist es vorteilhaft, wenn das Kompensationsglied im wesentlichen das gleiche Wärmedehnungsverhalten aufweist wie die Auflage des Biegeelements, insbesondere indem das Kompensationsglied und die Auflage des Biegeelements aus dem gleichen oder einem eng verwandten Material bestehen und die gleiche oder eine im wesentlichen gleiche wirksame Dicke aufweisen. Zwingend ist dies indessen nicht. Denn beispielsweise lassen sich die beschriebenen Vorteile auch mit unterschiedlichen Materialpaarungen für Kompensationsglied und Auflage erreichen, beispielsweise indem das Kompensationsglied dicker ausgeführt ist als die Auflage des Biegeelements, aber aus einem Material besteht, welches einen geringeren Wärmedehnungskoeffizienten aufweist als das Material der Auflage. Solche Materialpaarungen können sich unter bestimmten Voraussetzungen sogar als besonders vorteilhaft erweisen, beispielsweise im Hinblick auf eine zuverlässige Verbindung der beiden entsprechenden Oberflächen des Kompensationsglieds mit der gehäusefesten Aufnahme und dem Düseneinsatz, wodurch ein gesondertes, den Düseneinsatz gegen das Kompensationsglied vorspannendes Federelement (siehe unten) überflüssig wird.

Das Kompensationsglied ist besonders bevorzugt ringförmig ausgeführt und zwischen einem Kragen des Düseneinsatzes und einer Schulter der Aufnahme angeordnet. Unter "ringförming" ist dabei keineswegs zwingend kreisrund zu verstehen; vielmehr kann das ringförmig geschlossene Kompensationsglied jede beliebige in sich geschlossene geometrische Form annehmen. Mit einem derartigen ringförmigen Kompensationsglied lassen sich die für die Veränderung der Stellung des Düseneinsatzes erforderlichen Verschiebekräfte auch bei besonders kompakten Ventilen zuverlässig bereitstellen, wobei die zu der Achse des Düseneinsatzes symmetrische Einleitung der Verschiebekräfte in den Düseneinsatz für die Funktionssicherheit günstig ist.

Die vorliegende Erfindung lässt sich sowohl bei solchen Ventilen realisieren, bei denen die Aufnahme für den Düseneinsatz unmittelbar in dem Gehäuse ausgeformt ist, wie auch bei solchen Ventilen, bei denen die Aufnahme für den Düseneinsatz in einem gesonderten, in das Gehäuse eingesetzten Düsenträger ausgeführt ist. Die an zweiter Stelle genannte Ausführungsform ist insoweit günstig, als durch deren zusätzlichen geometrischen Freiheitsgrad eine Justierung der Düse zur Einstellung einer gewünschten Betriebskennlinie möglich ist, insbesondere indem der Düsenträger über ein Feingewinde in das Gehäuse eingeschraubt oder in einer wählbaren Tiefe in dieses eingepresst werden kann.

Weiter oben wurde bereits angesprochen, dass der Düseneinsatz mittels eines Federelements gegen das Kompensationsglied vorgespannt sein kann. Eine solche Feder kann sich dabei insbesondere an der gehäusefesten Aufnahme für den Düseneinsatz abstützen und auf verschiedene konstruktive Weise ausgeführt sein. Auf ein entsprechendes gesondertes Federelement kann verzichtet werden, wenn das Kompensationsglied mit dem Düseneinsatz sowie mit der zugeordneten Aufnahme in einer zur Übertragung von Zugkräften geeigneten Weise verbunden ist, beispielsweise mittels Verkleben, Vulkanisieren oder dergleichen. Eine solche Verbindung hat darüber hinaus den Vorteil, dass sie einen gasdichten Anschluss der entsprechenden Teile aneinander sicherstellen kann.

Die vorliegende Erfindung lässt sich mit den vorstehend dargelegten Vorteilen sowohl bei Ventilen mit lediglich einer Düse einsetzen wie auch bei solchen Ventilen, die zwei einander im wesentlichen gegenüberliegend angeordnete Düsen aufweisen, die wahlweise durch Verformung des Biegeelements infolge elektrischer Beaufschlagung verschließbar sind, wie dies beispielsweise bei 3/2-Wegesitzventilen zur Anwendung kommt. Die über einen breiten Temperaturbereich besonders hohe Präzision und Reproduzierbarkeit der Betriebskennlinie des erfindungsgemäßen Ventils ermöglicht gerade für 3/2-Wegeventile ganz neue Anwendungen. In besonderer Weise zum Tragen kommen die Vorteile der Erfindung bei proportional arbeitenden pneumatischen Stellgliedern bzw. Reglern, bei denen das Biegeelement bestimmungsgemäß nicht nur in seine beiden, jeweils eine der beiden Düsen verschließende Endstellung schaltbar ist, sondern vielmehr beliebige Zwischenstellungen zwischen den beiden Düsen einnehmen kann, um deren Durchströmung - durch Veränderung des Strömungswiderstands - in einem unterschiedlichen Verhältnis zueinander zu steuern. Erst unter Einsatz der vorliegenden Erfindung lassen sich dementsprechend piezoelektrisch betriebene Strömungsweichen bereitstellen, die hohen Anforderungen an die Betriebsgenauigkeit und Reproduzierbarkeit insbesondere unter Temperatureinfluss genügen. Je nachdem, welche Stellung das Biegeelement des entsprechenden proportional arbeitenden Weichenventils in seinem nicht elektrisch beaufschlagten Betriebspunkt einnehmen soll, können auf das Biegeelement eine oder zwei Rückstellfedern wirken, welche sich jeweils an einem gehäusefesten Widerlager abstützen und das Biegeelement in seine bei stromlosem Betrieb vorgegebene Stellung vorspannen bzw. in einem Hystereseeffekte reduzierenden Sinne wirken und die Rückstellung des Biegeelements, wenn die elektrische Beaufschlagung endet, unterstützen.

Im Folgenden wird die vorliegende Erfindung anhand zweier in der Zeichnung veranschaulichter bevorzugter Ausführungsbeispiele näher erläutert. Dabei zeigt
- Fig. 1: im Längsschnitt den hier allein interessierenden düsenseitigen Bereich eines ersten erfindungsgemäßen piezoelektrischen Ventils, das in seinem nicht dargestellten Bereich nach dem Stand der Technik aufgebaut ist, und
- Fig. 2: im Längsschnitt den hier allein interessierenden düsenseitigen Bereich eines zweiten erfindungsgemäßen piezoelektrischen Ventils, das ebenfalls im nicht dargestellten Bereich nach dem Stand der Technik aufgebaut ist.

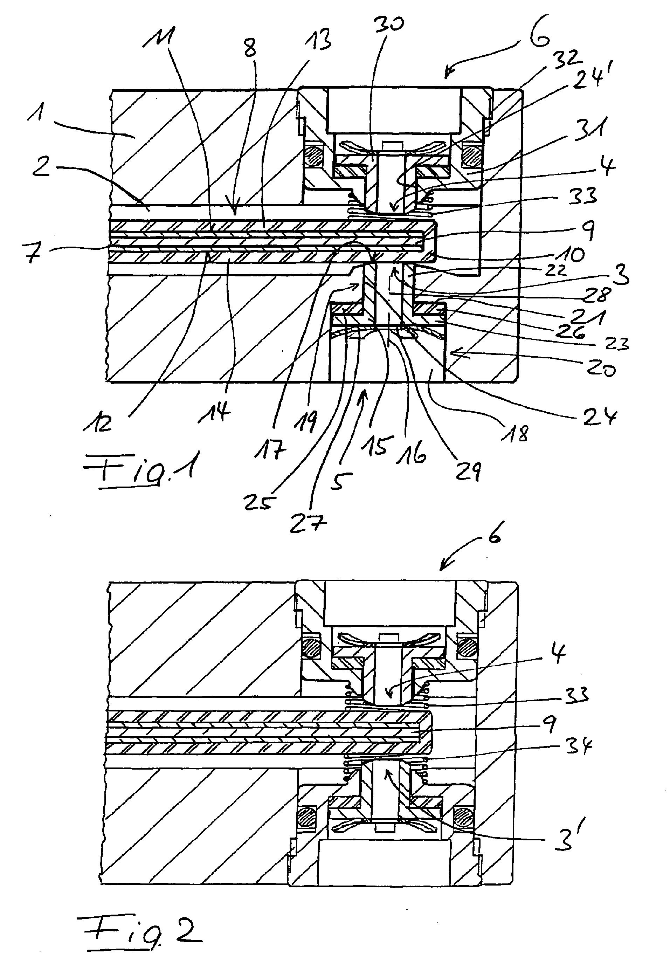

Hinsichtlich seines grundsätzlichen Aufbaus entspricht das Ventil gemäß der in Fig. 1 der Zeichnung wiedergegebenen bevorzugten Ausführungsform dem aus der EP 943812 A1 (US 6143744 B1) bekannten Ventil. Es wird daher auf eine eingehende Beschreibung sämtlicher Details und sonstigen Gestaltungsmerkmale des dargestellten Ventils verzichtet und statt dessen, zur Ergänzung der nachstehenden Erläuterung, die genannte Veröffentlichung im vollen Umfang in Bezug genommen.

Das in Fig. 1 der Zeichnung dargestellte piezoelektrische Ventil umfasst ein Gehäuse 1, welches einen durchströmbaren Innenraum 2 aufweist. In den Innenraum 2 münden zwei einander gegenüberliegende Düsen 3 und 4, die jeweils mit einem zugeordneten Anschluss 5 bzw. 6 für das Strömungsmedium kommunizieren. Weiterhin mündet in den Innenraum 2 des Gehäuses 1 in bekannter Weise eine - nicht dargestellte - Öffnung. In dem Innenraum 2 des Gehäuses 1 ist ein piezoelektrisches Biegeelement 7, welches durch elektrische Beaufschlagung verformbar ist, dergestalt aufgenommen, dass sich jener Bereich 8 des Biegeelements, der bei dessen elektrischer Beaufschlagung seine Lage relativ zu dem Gehäuse ändert, mit seinem endseitigen Abschnitt 9 zwischen die beiden Düsen 3 und 4 ragt. Je nach der elektrischen Beaufschlagung kann das Biegeelement 7 somit die erste Düse 3 oder die zweite Düse 4 verschließen oder aber beliebige Zwischenstellungen, in denen beide Düsen mehr oder weniger weit geöffnet sind, einnehmen.

In dem frei über dessen Einspannpunkt auskragenden Bereich 8 ist auf das Biegelement 7 ein aus elastisch nachgiebigem, elastomerem Material bestehender Überzug 10 aufgesetzt, welcher auf der Oberseite 11 und der Unterseite 12 des Biegeelements 7 jeweils eine Auflage 13 bzw. 14 bildet.

Die in Fig. 1 der Zeichnung unten dargestellte Düse 3 umfasst einen Düseneinsatz 15, dessen dem Innenraum 2 des Gehäuses zugewandte Stirnseite eine auf der Achse 16 der Düse 3 im wesentlichen senkrecht stehende Sitzfläche 17 bildet. Zur Aufnahme des Düseneinsatzes 15 weist das Gehäuse 1 eine Stufenbohrung 18 auf, deren Bereich 19 mit dem geringeren Bohrungsdurchmesser benachbart dem Innenraum 2 des Gehäuses und deren Bereich 20 mit dem größeren Bohrungsdurchmesser benachbart der Außenseite des Gehäuses 1 angeordnet ist. Die beiden unterschiedliche Bohrungsdurchmesser aufweisenden Bereiche 19 und 20 der Stufenbohrung 18 sind durch eine Schulter 21 voneinander getrennt. Der Düseneinsatz 15 weist einen Rohrabschnitt 22 und einen endseitig daran angeordneten Kragen 23 auf. Er ist in dem Gehäuse 1 im wesentlichen senkrecht zu der Sitzfläche 17 verschiebbar geführt. Hierzu ist der Rohrabschnitt 22 des Düseneinsatzes 15 in dem den geringeren Bohrungsdurchmesser aufweisenden Bereich 19 der Stufenbohrung 18, die insoweit eine Aufnahme 24 für den Düseneinsatz bildet, längs der Achse 16 gleitend aufgenommen.

Zwischen der Schulter 21 der Stufenbohrung 18 und dem Kragen 23 des Düseneinsatzes 15 ist ein wärmdehnbares Kompensationsglied 25 in Form eines Elastomerringes 26 angeordnet. Mittels einer Feder 27, welche sich an der Wand des den größeren Bohrungsdurchmesser aufweisenden Bereiches 20 der Stufenbohrung 18 abstützt und eine zu der Bohrung 28 des Düseneinsatzes 15 korrespondierende Bohrung 29 aufweist, wird der Düseneinsatz zur Anlage an dem Elastomerring 26 vorgespannt. Der Elastomerring 26 besteht aus dem selben Material wir der Überzug 10 des Biegeelements 7 und weist eine Dicke auf, die der Dicke des Überzuges 10 in dem der Düse 3 gegenüberliegenden Bereich entspricht. Auf diese Weise wird bei einem Anstieg der Betriebstemperatur des Ventils der Düseneinsatz 15 in dem gleichen Maße zurückbewegt, d.h. von dem Biegelement 7 wegbewegt, wie sich der Überzug 10 wärmebedingt ausdehnt. Die Schließstellung des Biegewandlers bleibt somit trotz sich temperaturabhängig ändernder Dicke des Überzuges 10 konstant. Entsprechendes gilt bei geöffneter Düse 3 für den Abstand der Oberfläche der Auflage 14 zu der Sitzfläche 17 bei einer vorgegebenen Stellung des Biegelements 7.

Für die in Fig. 1 der Zeichnung oben dargestellte Düse 4 gelten die vorstehenden Erläuterungen in entsprechender Weise mit der Maßgabe, dass der entsprechende Düseneinsatz 30 nicht unmittelbar in einer Bohrung des Gehäuses 1 verschiebbar geführt ist, sondern vielmehr in der - wiederum als Stufenbohrung ausgeführten - Bohrung eines Düsenträgers 31. Die Aufnahme 24' für den Düseneinsatz 30 wird demgemäß durch die Stufenbohrung des Düsenträgers 31 gebildet. Der Düsenträger 31 ist über eine Gewindeverbindung 32 in das Gehäuse 1 eingeschraubt. Die Stellung des Düsenträgers 31 lässt sich somit zum Zwecke der Justierung der Schalt- bzw. Betriebskennlinie des Ventils einstellen.

Dargestellt ist in Fig. 1 auch die Rückstellfeder 33, welche das Biegeelement 7 dergestalt gegen die Düse 3 vorspannt, dass ohne elektrische Beaufschlagung des Biegelements die Düse 3 zuverlässig geschlossen ist, indem der Überzug 10 des Biegelements an ihr dichtend anliegt.

Das in Fig. 2 der Zeichnung veranschaulichte piezoelektrische Ventil unterscheidet sich von demjenigen nach Fig. 1 lediglich durch zwei Merkmale. Zum einen sind beide Düsen 3' und 4 so ausgeführt, wie dies vorstehend im Hinblick auf die Düse 4 des Ventils nach Fig. 1 beschrieben wurde, so dass beide Düsen 3' und 4 in dem beschriebenen Sinne einstellbar sind. Des weiteren sind zwei spiegelbildlich angeordnete Rückstellfedern 33 und 34 vorgesehen, die einander entgegengesetzt auf das Biegelement 7 wirken, so dass dieses ohne elektrische Beaufschlagung zuverlässig eine zwischen den Sitzflächen der beiden Düsen 3' und 4 liegende Mittelstellung einnimmt. Das Ventil nach Fig. 2 eignet sich auf diese Weise in besonderem Maße zur Verwendung als proportional arbeitendes Stellglied.

## Patentansprüche

1. Piezoelektrisches Ventil mit einem Gehäuse (1), welches einen durchströmbaren Innenraum (2) aufweist, in den mindestens eine mit einem zugeordneten Anschluß (5,6) für das Strömungsmedium kommunizierende, einen Dichtsitz mit einer Sitzfläche aufweisende Düse (3,4;3',4) mündet, wobei in dem Innenraum des Gehäuses ein durch elektrische Beaufschlagung verformbares piezoelektrisches Biegeelement (7) dergestalt aufgenommen ist, dass die Düse (3,4;3',4) durch einen aufgrund der Verformung des Biegeelements (7) relativ zu der Düse bewegbaren Abschnitt (9) des Biegelements verschließbar ist, und das Biegelement zumindest in seinem der Düse gegenüberliegenden Bereich eine Auflage (13,14) aus einem elastisch nachgiebigen Material aufweist,
**dadurch gekennzeichnet, dass** der Dichtsitz stirnseitig an einem Düseneinsatz (15,30) angeordnet ist, welcher im wesentlichen senkrecht zur Sitzfläche (17) verschiebbar in einer gehäusefesten Aufnahme (24,24') angeordnet ist, wobei zwischen der Aufnahme und dem zugeordneten Düseneinsatz ein wärmedehnbares Kompensationsglied (25) wirkt.

2. Piezoelektrisches Ventil nach Anspruch 1, **dadurch gekennzeichnet, dass** das Kompensationsglied (25) ringförmig ausgeführt und zwischen einem Kragen (23) des Düseneinsatzes (15,30) und einer Schulter (21) der Aufnahme (24,24') angeordnet ist.

3. Piezoelektrisches Ventil nach Anspruch 1 oder Anspruch 2, **dadurch gekennzeichnet, dass** das Kompensationsglied (25) im wesentlichen das gleiche Wärmedehnungsverhalten aufweist wie die Auflage (13, 14) des Biegelements (7).

4. Piezoelektrisches Ventil nach Anspruch 3, **dadurch gekennzeichnet, dass** die Dicken von Kompensationsglied (25) und Auflage (13,14) einander im wesentlichen entsprechen.

5. Piezoelektrisches Ventil nach einem der Ansprüche 1 bis 4, **dadurch gekennzeichnet, dass** die Aufnahme (24') in einem in das Gehäuse (1) eingesetzten Düsenträger (31) ausgeführt ist.

6. Piezoelektrisches Ventil nach einem der Ansprüche 1 bis 5, **dadurch gekennzeichnet, dass** der Düseneinsatz (15,30) mittels eines Federelements (27) gegen das Kompensationsglied (25) vorgespannt ist.

7. Piezoelektrisches Ventil nach einem der Ansprüche 1 bis 5, **dadurch gekennzeichnet, dass** Kompensationsglied (25) mit dem Düseneinsatz (15,30) sowie mit der zugeordneten Aufnahme (24,24') in einer zur Übertragung von Zugkräften geeigneten Weise verbunden ist

8. Piezoelektrisches Ventil nach einem der Ansprüche 1 bis 7, **dadurch gekennzeichnet, dass** es zwei einander im wesentlichen gegenüberliegende Düsen (3,4; 3',4) aufweist, die wahlweise durch Verformung des Biegelements (7) infolge elektrischer Beaufschlagung verschließbar sind.

9. Piezoelektrisches Ventil nach Anspruch 8, **dadurch gekennzeichnet, dass** auf das Biegelement (7) im Bereich von dessen zum Verschließen der beiden Düsen (3,4) bestimmten Abschnitt (9) eine Rückstellfeder (33) wirkt, die sich an einem gehäusefesten Widerlager abstützt und das Biegelement zur Anlage an eine der beiden Düsen vorspannt.

10. Piezoelektrisches Ventil nach Anspruch 8, **dadurch gekennzeichnet, dass** auf das Biegelement (7) im Bereich von dessen zum Verschließen der beiden Düsen (3',4) bestimmten Abschnitt (9) zwei einander entgegengesetzt gerichtete Rückstellfedern (33, 34) wirken, die das Biegelement in eine zwischen den beiden Düsen liegende Mittelstellung vorspannen und sich jeweils an einem gehäusefesten Widerlager abstützen.

11. Piezoelektrisches Ventil nach einem der Ansprüche 7 bis 10, **dadurch gekennzeichnet, dass** an beiden Düsen (3',4) der jeweilige Dichtsitz stirnseitig an einem Düseneinsatz (15,30) angeordnet ist, welcher im wesentlichen senkrecht zur Sitzfläche (17) verschiebbar in einer gehäusefesten Aufnahme (24,24') angeordnet ist, wobei jeweils zwischen der Aufnahme und dem zugeordneten Düseneinsatz ein wärmedehnbares Kompensationsglied (25) wirkt.

## Claims

1. A piezoelectric valve comprising a housing (1) with an inner chamber (2) through which a medium can flow, in which chamber ends at least one nozzle (3, 4; 3', 4) which communicates with an associated connection (5, 6) for the flow medium and has a sealing seat with a seat face, wherein in the inner chamber of the housing, a piezoelectric bending element (7) deformable by electrical energization is received in such a manner that the nozzle (3, 4; 3', 4) can be closed by a portion (9) of the bending element which, due to the deformation of the bending element (7), is movable relative to the nozzle, and the bending element has a support (13, 14) made of an elastically resilient material at least in its region opposite the nozzle,
**characterized in that** the sealing seat is arranged at the front side on a nozzle insert (15, 30) which is arranged to be displaceable substantially perpendicular to the seat face (17) in a receptacle (24, 24') fixed to the housing, wherein a thermally expandable compensation member (25) acts between the receptacle and the associated nozzle insert.

2. The piezoelectric valve according to claim 1, **characterized in that** the compensation member (25) is annularly shaped and is arranged between a collar (23) of the nozzle insert (15, 30) and a shoulder (21) of the receptacle (24, 24').

3. The piezoelectric valve according to claim 1 or claim 2, **characterized in that** the compensation member (25) has substantially the same thermal expansion behavior as the support (13, 14) of the bending element (7).

4. The piezoelectric valve according to claim 3, **characterized in that** the thicknesses of the compensation member (25) and the support (13, 14) correspond substantially to one another.

5. The piezoelectric valve according to any one of the claims 1 to 4, **characterized in that** the receptacle (24') is implemented in a nozzle carrier (31) inserted in the housing (1).

6. The piezoelectric valve according to any one of the claims 1 to 5, **characterized in that** the nozzle insert (15, 30) is preloaded by means of a spring element (27) against the compensation member (25).

7. The piezoelectric valve according to any one of the claims 1 to 5, **characterized in that** the compensation member (25) is connected to the nozzle insert (15, 30) as well as to the associated receptacle (24, 24') in a manner suitable for transmission of tensile forces.

8. The piezoelectric valve according to any one of the claims 1 to 7, **characterized in that** it comprises two nozzles (3, 4; 3', 4) arranged substantially opposite one another and which can be closed selectively by deforming the bending element (7) through electrical energization.

9. The piezoelectric valve according to claims 8, **characterized in that** a return spring (33) acts on the bending element (7) in the regions of said bending element's portion (9) intended for closing the two nozzles (3, 4), which return spring is supported on an abutment fixed to the housing and preloads the bending element so that the bending element rests against one of the two nozzles.

10. The piezoelectric valve according to claim 8, **characterized in that** two return nozzles (33, 34), directed in opposite directions to one another, act on the bending element (7) in the bending element's portion (9) intended for closing the two nozzles (3', 4), which return springs preload the bending element into a middle position located between the two nozzles and are each supported on an abutment fixed to the housing.

11. The piezoelectric valve according to any one of the claims 7 to 10, **characterized in that** on both nozzles (3', 4), the respective sealing seat is arranged on the front side on a nozzle insert (15, 30) which is arranged in a receptacle (24, 24') fixed to the housing so as to be displaceable substantially perpendicular to the seat face (17), wherein a thermally expandable compensation member (25) acts in each case between the receptacle and the associated nozzle insert.

## Revendications

1. Soupape piézoélectrique comprenant un carter (1), qui présente un espace intérieur (2) pouvant être traversé, dans lequel débouche au moins une buse (3, 4 ; 3', 4) communiquant avec un raccordement (5, 6) attribué pour l'agent d'écoulement et présentant un siège d'étanchéité avec une surface de siège, un élément de flexion (7) piézoélectrique, pouvant être déformé par la sollicitation électrique, étant réceptionné dans l'espace intérieur du carter, de telle sorte que la buse (3, 4 ; 3', 4) peut être fermée par un tronçon (9) de l'élément de flexion qui peut être déplacé par rapport à la buse compte tenu de la déformation de l'élément de flexion (7), et l'élément de flexion présente au moins dans sa zone opposée à la buse un support (13, 14) à base d'un matériau élastiquement souple,
**caractérisée en ce que** le siège d'étanchéité est disposé côté avant sur un insert de buse (15, 30), lequel est disposé dans un logement (24, 24') solidaire du carter de façon à pouvoir coulisser sensiblement perpendiculairement à la surface de siège (17), un élément de compensation (25) dilatable à la chaleur à la chaleur agissant entre le logement et l'insert de buse attribué.

2. Soupape piézoélectrique selon la revendication 1, **caractérisée en ce que** l'élément de compensation (25) est conçu en forme de bague et est disposé entre une collerette (23) de l'insert de buse (15, 30) et un épaulement (21) du logement (24, 24').

3. Soupape piézoélectrique selon la revendication 1 ou la revendication 2, **caractérisée en ce que** l'élément de compensation (25) présente sensiblement le même comportement à la dilatation thermique que le support (13, 14) de l'élément de flexion (7).

4. Soupape piézoélectrique selon la revendication 3, **caractérisée en ce que** les épaisseurs de l'élément de compensation (25) et du support (13, 14) se correspondent sensiblement.

5. Soupape piézoélectrique selon l'une des revendications 1 à 4, **caractérisée en ce que** le logement (24') est réalisé dans un support de buse (31) inséré dans le carter (1).

6. Soupape piézoélectrique selon l'une des revendications 1 à 5, **caractérisée en ce que** l'insert de buse (15, 30) est pré-tendu au moyen d'un élément de ressort (27) contre l'élément de compensation (25).

7. Soupape piézoélectrique selon l'une des revendications 1 à 5, **caractérisée en ce que** l'élément de compensation (25) est relié à l'insert de buse (15, 30) et au logement (24, 24') associé d'une façon appropriée pour la transmission de forces de traction.

8. Soupape piézoélectrique selon l'une des revendications 1 à 7, **caractérisée en ce qu'**elle présente deux buses (3, 4 ; 3', 4) qui se font sensiblement face et qui peuvent être fermées en option par la déformation de l'élément de flexion (7) sous l'effet d'une sollicitation électrique.

9. Soupape piézoélectrique selon la revendication 8, **caractérisée en ce qu'**un ressort de rappel (33), qui s'appuie sur un support solidaire du carter et prétend l'élément de flexion pour s'appuyer sur l'une des deux buses, agit sur l'élément de flexion (7) dans la zone de sa partie (9) destinée à la fermeture des deux buses (3, 4).

10. Soupape piézoélectrique selon la revendication 8, **caractérisée en ce que** deux ressorts de rappel (33, 34) dirigés dans le sens opposé, qui pré-tendent l'élément de flexion dans une position centrale située entre les deux buses et s'appuient respectivement sur un support solidaire du carter, agissent sur l'élément de flexion (7) dans la zone de sa partie (9) qui est destinée à la fermeture des deux buses (3', 4).

11. Soupape piézoélectrique selon l'une des revendications 7 à 10, **caractérisée en ce que**, sur les deux buses (3', 4), le siège étanche concerné est disposé côté avant sur un insert de buse (15, 30), lequel insert est disposé dans un logement (24, 24') solidaire du carter, de façon à pouvoir coulisser sensiblement perpendiculairement à la surface de siège (17), un élément de compensation (25) dilatable à la chaleur agissant respectivement entre le logement et l'insert de buse associé.
